# FASCICULE DE BREVET EUROPEEN

(11) **EP 0 589 806 B1**
(45) Date de publication et mention de la délivrance du brevet: **24.04.1996**
(21) Numéro de dépôt: 93420373.8
(22) Date de dépôt: 17.09.1993
(51) Int. Cl.: E05F 15/12, F16C 11/00

(54) **Dispositif de motorisation pour la manoeuvre électrique des volets et autres vantaux pivotants**
Elektromotorischer Antrieb für Laden und andere Schwenkflügel
Electric motor drive for shutters and other swinging wings

(30) Priorité: 18.09.1992 FR 9211357
(43) Date de publication de la demande: 30.03.1994
(73) Titulaire: SIMU, F-70100 Arc-Les-Gray (FR)
(72) Inventeur: Bresson, René, F-70100 Gray (FR); Bonato, Christian, F-70290 Champagney (FR)
(74) Mandataire: Monnier, Guy

(56) Documents cités:
- FR-A- 2 490 712
- CHIRONIS, N.P. 'mechanisms, linkages and mechanical controls' 1965 , MCGRAW-HILL , NEW YORK, USA

## Description

La présente invention a pour objet un dispositif de motorisation destiné à être associé à un volet ou autre vantail pivotant en vue d'en assurer la manoeuvre électrique.

En vue d'éviter toute ambiguité, dans la description qui va suivre comme dans les revendications, on utilisera la terminologie ci-après indiquée :
- les mots "paroi mobile" désigneront un volet ou autre vantail monté à pivotement sur la façade d'une construction, en vis-à-vis d'une baie pratiquée dans cette dernière ;
- les mots "paroi fixe" désigneront celle des faces (communément appelées "tableaux") de l'embrasure de la baie qui est orientée parallèlement à l'axe de pivotement de la paroi mobile, c'est-à-dire perpendiculairement à la façade, et qui est contigue à cet axe.

L'invention a pour but de permettre la réalisation d'un dispositif de motorisation agencé de façon à ce que la paroi mobile soit actionnée pour se déplacer suivant un angle d'environ 180° de la position d'ouverture à la position de fermeture et vice versa. Le dispositif suivant l'invention est défini à la revendication 1.

En fait il comprend, outre un moto-réducteur électrique destiné à être fixé à l'une des deux parois de manière à ce que son arbre de sortie soit orienté perpendiculairement à l'axe de pivotement de la paroi mobile, un mécanisme d'accouplement qui comporte un maneton calé radialement sur l'arbre de sortie précité, une bielle à profil coudé et un pivot d'attelage destiné à être monté sur l'autre paroi en étant orienté parallèlement à l'axe de pivotement et à une certaine distance de celui-ci, la liaison entre chacune des extrémités de la bielle coudée et le maneton, respectivement le pivot d'attelage, incorporant une triple articulation dont les axes sont disposés dans trois plans différents orientés perpendiculairement les uns par rapport aux autres.

Les essais ont démontré que moyennant un réglage précis de la longueur du maneton et de la bielle coudée, on obtenait un déplacement angulaire entièrement satisfaisant de la paroi mobile par rapport à la paroi fixe. Il convient d'observer que moyennant un calage angulaire approprié du maneton sur l'arbre de sortie du moto-réducteur, on peut faire en sorte que le début et la fin du mouvement de pivotement s'effectuent avec une très forte démultiplication, ce qui a pour avantages d'une part d'éviter tout heurt dans la cinématique, d'autre part de permettre l'adoption d'un moto-réducteur à puissance réduite, présentant de ce fait un faible encombrement qui facilite évidemment son installation sur l'une ou l'autre des deux parois, mobile ou fixe.

Le dessin annexé, donné à titre d'exemple, permettra de mieux comprendre l'invention, les détails qu'elle présente et les avantages qu'elle est susceptible de procurer :

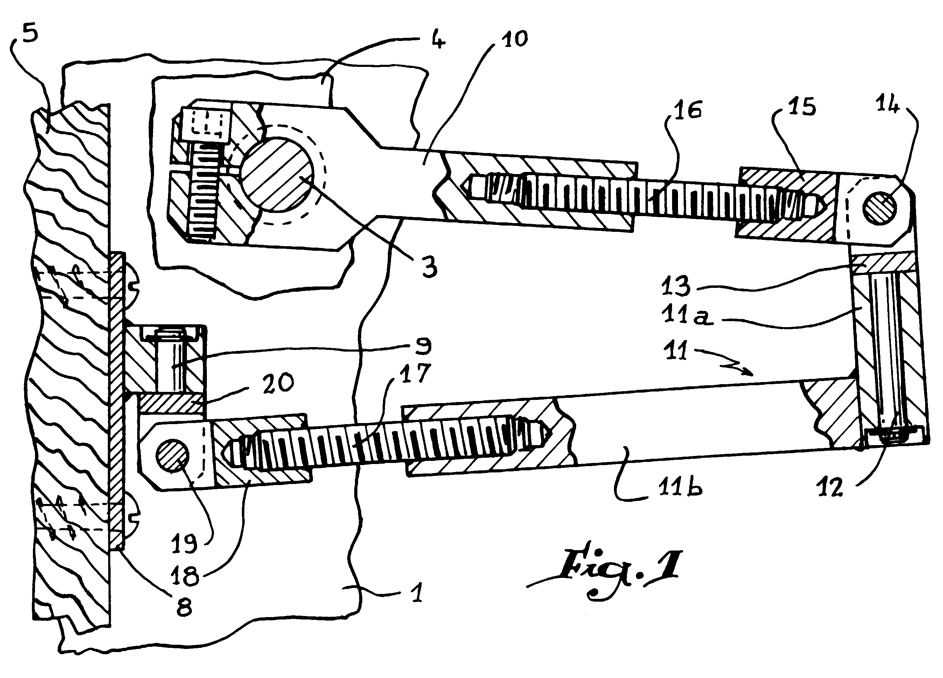

Fig. 1 est une coupe axiale schématique d'un dispositif de motorisation suivant l'invention, le moto-réducteur de commande ayant été supposé noyé à l'intérieur de l'embrasure de la baie à laquelle la paroi mobile est associée.

Fig. 2, 3 et 4 illustrent le déplacement angulaire de la paroi mobile, les pièces étant représentées au cours du mouvement d'ouverture, à trois orientations successives de ladite paroi.

Sur ce dessin, la référence 1 désigne la paroi fixe à l'intérieur de laquelle est ménagé un logement propre à recevoir un moto-réducteur électrique 2 dont l'arbre de sortie 3 dépasse à l'horizontale en avant d'une plaque de recouvrement 4. Cet arbre 3 se trouve donc orienté perpendiculairement à l'axe de pivotement de la paroi mobile 5, axe de pivotement qui est en fait matèrialisé par les paumelles 6 qui assurent le montage pivotant de cette paroi mobile 5 sur la façade 7 de la construction. Contre la face extérieure de la paroi mobile 5 est fixée une semelle 8 qui porte un axe ou pivot vertical d'attelage 9, tourné vers le bas dans l'exemple de réalisation considéré ; ce pivot 9 se trouve orienté parallèlement à l'axe des paumelles 6 en étant décalé vers l'intérieur par rapport au bord de la paroi mobile 5 qui coopère avec lesdites paumelles.

La liaison entre le pivot 9 et l'arbre 3 est opérée à l'aide d'un mécanisme d'accouplement qui comprend un maneton 10 calé radialement sur l'extrémité de l'arbre 3 et associé à une bielle 11 à profil coudé, comportant un petit bras 11a vertical et un grand bras 11b horizontal.

Le petit bras 11a est percé axialement pour recevoir un pivot 12 qui dépasse vers le haut et porte une chape 13 pourvue d'un axe transversal 14. Sur ce dernier vient s'articuler L'extrémité d'un dé 15 taraudé axialement pour recevoir une tige filetée 16 dont l'extrémité opposée est elle-même vissée dans un taraudage pratiqué axialement dans le maneton 10. On réalise de la sorte un système à trois articulations (12, 14 et 16) qui permet en outre le réglage précis de la longueur utile du maneton 10 en vue de l'adaptation parfaite du mécanisme d'accouplement.

De la même manière, l'extrémité libre du bras 11b de la bielle coudée 11 est équipée axialement d'une tige filetée 17 vissée dans un dé 18 solidaire d'un tenon longitudinal engagé sur un axe transversal 19 ; ce dernier est porté par les deux flasques d'une chape 20 prévue en bout du pivot d'attelage 9. Ici également, on réalise une triple articulation (17, 19 et 9) dont les axes sont orientés suivant trois plans perpendiculaires, ce système permettant au surplus le réglage précis de la longueur utile du bras 11b de la bielle coudée 11.

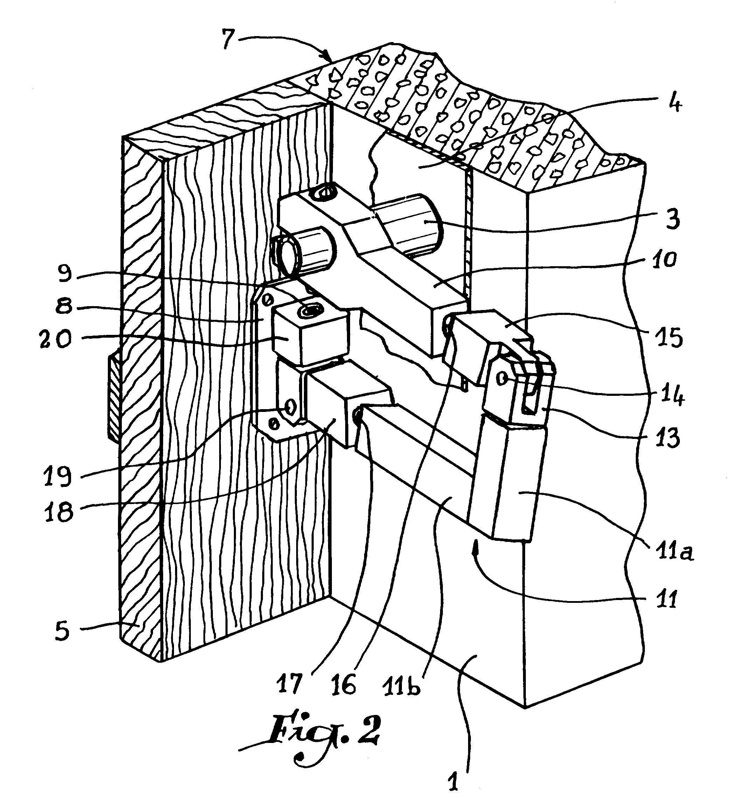

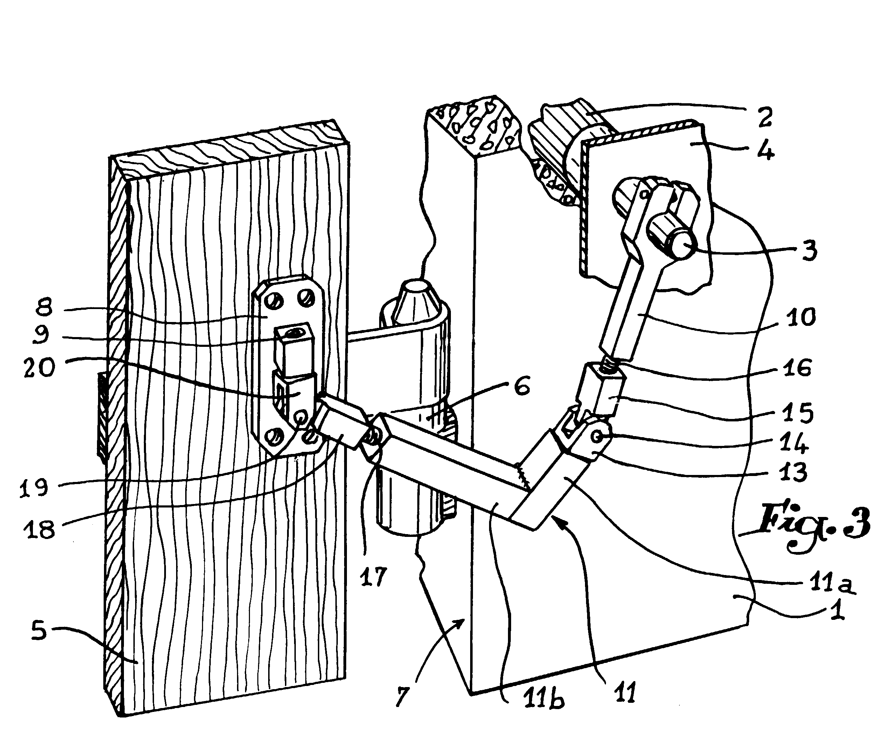

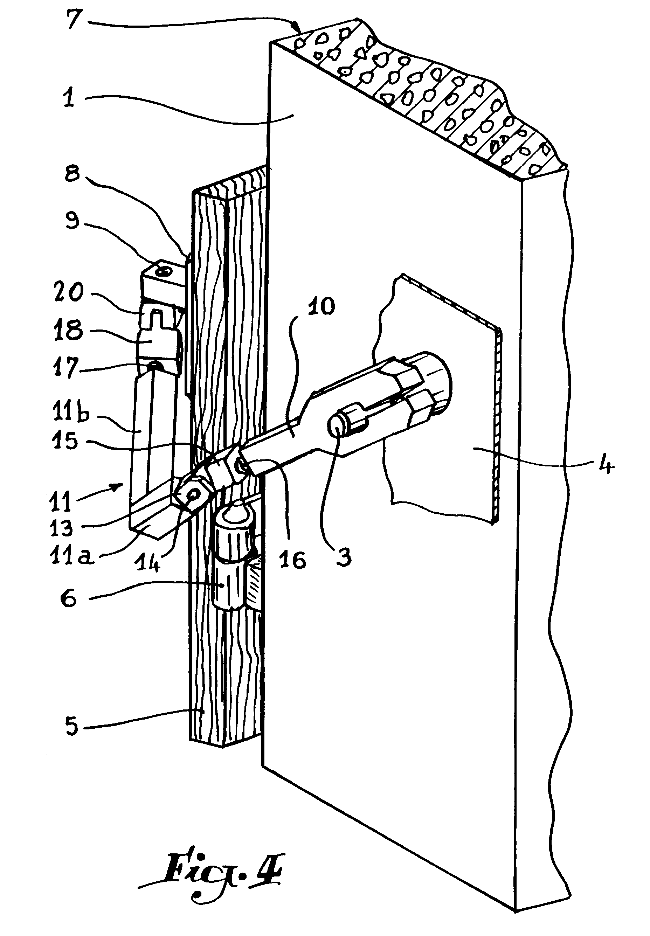

En fig. 2, la paroi mobile 5 a été représentée à la position de fermeture pour laquelle elle obture l'embrasure de la baie. Si l'on met sous tension le moto-réducteur 2 dans le sens de rotation dextrorsum, le maneton 10 se déplace angulairement avec l'arbre 3 en s'abaissant, ce qui a pour effet de repousser vers le bas la bielle coudée 11 par déformation du mécanisme d'accouplement dont les différentes pièces constitutives pivotent les unes par rapport aux autres. Moyennant un calage angulaire convenable du maneton 10 sur l'arbre 3, on peut obtenir que la démultiplication obtenue soit maximale au début de la rotation de l'arbre 3, c'est-à-dire au moment où le couple résistant est le plus important ; cette démultiplication va en diminuant pour atteindre sa valeur minimale à la position de mi-ouverture illustrée en fig. 3, et pour augmenter progressivement au fur et à mesure qu'on s'approche de la position de pleine ouverture de la paroi mobile 2 telle que représentée en fig. 4.

Il convient d'observer que si le moto-réducteur 2 est du type irréversible, la paroi mobile 5 se trouve automatiquement immobilisée angulairement à toutes les orientations, sans qu'il soit nécessaire de prévoir des mécanismes de blocage ou de verrouillage.

On comprend sans peine que la rotation de l'arbre 2 dans le sens sinistrorsum à partir de la position ouverte de fig. 4 va ramener ladite paroi à la position fermée suivant fig. 2, moyennant le même processus de déformation du mécanisme d'accouplement interposé entre le pivot 9 et l'arbre 3.

Le moto-réducteur 2 est du type de ceux utilisés pour la manoeuvre électrique des stores ou autres ensembles mobiles et comprend en conséquence un mécanisme de débrayage automatique (limiteur de couple) et un dispositif de fins de course associé au commutateur d'actionnement.

Il va de soi qu'on peut avoir recours, pour le réglage de la longueur utile de chaque bras de la bielle coudée 11, à des systèmes indépendants du mode de pivotement axial. Bien évidemment, la position respective du moto-réducteur 2 et du pivot d'attelage 9 est susceptible d'être inversée, le moto-réducteur 2 se trouvant alors "embarqué" sur la paroi mobile pour coopérer avec un pivot 9 scellé contre la paroi fixe 1 ; le fonctionnement est autrement identique, cette solution étant de nature à mieux convenir lorsqu'il s'agit d'équiper une baie déjà munie de sa paroi mobile de fermeture. On comprend encore que le dispositif de motorisation suivant l'invention est susceptible d'être adopté pour la manoeuvre de parois mobiles articulées sur une paroi fixe suivant un axe de pivotement horizontal.

Il va de soi que les différents axes de pivotement du mécanisme d'accouplement sont susceptibles d'être remplacés par des rotules. On notera en outre que le dispositif suivant l'invention peut être avantageusement utilisé pour la manoeuvre des portails.

## Revendications

1. Dispositif de motorisation pour la manoeuvre électrique d'une paroi mobile (5) montée à pivotement sur la paroi fixe (1) d'une baie ou similaire, caractérisé en ce qu'il comprend, outre un moto-réducteur électrique (2) destiné à être fixé à l'une des deux parois (1 ou 5) de manière à ce que son arbre de sortie (3) soit orienté perpendiculairement à l'axe de pivotement de la paroi mobile (5), un mécanisme d'accouplement qui comporte un maneton (10) calé radialement sur l'arbre de sortie précité (3), une bielle à profil coudé (11) et un pivot d'attelage (9) destiné à être monté sur l'autre paroi (5 ou 1) en étant orienté parallèlement à l'axe de pivotement et à une certaine distance de celui-ci, la liaison entre chacune des extrémités de la bielle coudée (11) et le maneton (10), respectivement le pivot d'attelage (9), incorporant une triple articulation dont les axes sont disposés dans trois plans différents orientés perpendiculairement les uns par rapport aux autres.

2. Dispositif suivant la revendication 1, caractérisé en ce que la liaison entre la bielle coudée (11) et le maneton (10) ou le pivot (9) est opérée à travers un dé (15, 18) monté en bout du maneton, respectivement de l'un (11b) des deux bras de la bielle, lequel dé, libre de pivoter axialement par rapport à la pièce qui le porte, est articulé sur l'axe transversal (14, 19) d'une chape (13, 20) qui est elle-même libre de pivoter par rapport à ladite bielle, respectivement avec le pivot d'attelage.

3. Dispositif suivant l'une quelconque des revendications 1 et 2, caractérisé en ce qu'il comporte des moyens (16, 17) pour le réglage de la longueur utile du maneton (10), respectivement de l'un au moins (11b) des deux bras de la bielle coudée (11).

## Patentansprüche

1. Motorisierungsvorrichtung zur elektrischen Betätigung einer schwenkbar an der feststehenden Wandung (1) eines Mauerausschnitts oder dergleichen befestigten beweglichen wandung (5),
**dadurch gekennzeichnet, daß**
sie außer einem Elektromotor mit Getriebe (2), der an einer der zwei Wandungen (1 oder 5) derart anbringbar ist, daß seine Abtriebswelle (3) senkrecht zur Schwenkachse der beweglichen Wandung (5) ausgerichtet ist, eine aus einem an der Abtriebswelle (3) festgelegten radialen Kurbelzapfen (10), einer gekrümmten Pleuelstange (11) und einem Kupplungszapfen (9) bestehende Kupplungsvorrichtung umfaßt, die an der anderen Wandung (5 oder 1) parallel zur Drehachse und in einem bestimmten Abstand von dieser anbringbar ist, wobei die Verbindung zwischen jedem der Enden der gekrümmten Pleuelstange (11) und dem Kurbelzapfens (10), beziehungsweise dem Kupplungszapfen (9) ein Dreifachgelenk hat, dessen Achsen in drei verschiedenen, jeweils zueinander senkrecht verlaufenden Ebenen liegen.

2. Vorrichtung nach Anspruch 1,
**dadurch gekennzeichnet, daß**
die Verbindung zwischen der gekrümmten Pleuelstange (11) und dem Kurbelzapfen (10) oder dem Zapfen (9) über ein Formstück (15, 18) erfolgt, das am Ende des Kurbelzapfens, beziehungsweise an einem (11b) der beiden Arme der Pleuelstange befestigt ist, wobei das axial bezüglich des es tragenden Teils drehbare Formstück auf der Querachse (14, 19) mit einer Abdeckung (13, 20) gelenkig verbunden ist, die ihrerseits bezüglich der Pleuelstange, beziehungsweise des Kupplungszapfens drehbar ist.

3. Vorrichtung nach einem der Ansprüche 1 oder 2,
**dadurch gekennzeichnet, daß**
sie Einrichtungen (16, 17) zum Einstellen der nutzbaren Lange des Kurbelzapfens (10), beziehungsweise der zumindest eines der beiden Arme der gekrümmten Fleuelstange (11) umfaßt.

## Claims

1. Motorisation device for the electrical operation of a movable wall (5) pivotably mounted on the fixed wall (1) of a bay or the like, characterised in that, in addition to comprising an electrical reduction motor (2) intended to be fixed to one of the two walls (1 or 5) so that its output shaft (3) is orientated perpendicularly relative to the pivot axis of the movable wall (5), said device comprises a coupling mechanism which includes a handle (10) fitted radially on the above-mentioned output shaft (3), a bar with a bent profile (11), and an attachment pivot (9) intended to be mounted on the other wall (5 or 1) whilst being orientated parallel to the pivot axis and at a certain distance therefrom, the connection between each of the ends of the bent bar (11) and the handle (10), i.e. the attachment pivot (9), incorporating a triple articulation, the axes of which are disposed in three different planes orientated perpendicularly relative to one another.

2. Device according to claim 1, characterised in that the connection between the bent bar (11) and the handle (10) or the pivot (9) is effected through a bearing (15, 18) mounted at the end of the handle, i,e. of one (11b) of the two arms of the bar, which bearing, free to pivot axially relative to the component which supports it, articulated on the transverse axis (14, 19) of a fork-joint (13, 20) which is itself free to pivot relative to said bar, i.e. with the attachment pivot.

3. Device according to any of claims 1 and 2, characterised in that it comprises means (16, 17) for adjusting the useful length of the handle (10), i.e. of at least one (11b) of the two arms of the bent bar (11).
